# EUROPEAN PATENT SPECIFICATION

(11) **EP 4 167 628 B1**
(45) Date of publication and mention of the grant of the patent: **07.01.2026**
(21) Application number: 21822846.8
(22) Date of filing: 18.05.2021
(51) Int. Cl.: H04W 24/02, H04W 48/12

(54) **LOGICAL CELL STATE UPDATE METHOD, BASE STATION, TERMINAL, AND STORAGE MEDIUM**
VERFAHREN ZUR AKTUALISIERUNG DES ZUSTANDS LOGISCHER ZELLEN, BASISSTATION, ENDGERÄT UND SPEICHERMEDIUM
PROCÉDÉ DE MISE À JOUR D'ÉTAT DE CELLULE LOGIQUE, STATION DE BASE, TERMINAL, ET SUPPORT DE STOCKAGE

(30) Priority: 12.06.2020 CN 202010536664
(43) Date of publication of application: 19.04.2023
(73) Proprietor: ZTE Corporation, Shenzhen, Guangdong 518057 (CN)
(72) Inventor: LI, Jun, Shenzhen, Guangdong 518057 (CN)
(74) Representative: Deambrogi, Edgardo
(86) International application number: PCT/CN2021/094302
(87) International publication number: WO 2021/249136

(56) References cited:
- WO-A1-2019/214731
- CN-A- 103 037 471
- CN-A- 110 870 354
- CN-A- 111 165 020
- US-A1- 2016 353 361
- US-A1- 2020 092 771
- ERICSSON: "Further aspects of SNPN", vol. RAN WG2, no. Chongqing, P.R. China; 20191014 - 20191018, 3 October 2019 (2019-10-03), XP051803854, Retrieved from the Internet <URL:https://ftp.3gpp.org/tsg_ran/WG2_RL2/TSGR2_107bis/Docs/R2-1912360.zip R2-1912360 - Further aspects of SNPN.docx> [retrieved on 20191003]
- ERICSSON: "eMIMO corrections", 3GPP DRAFT; R2-2003910, vol. RAN WG2, 7 May 2020 (2020-05-07), pages 1 - 332, XP051881265

## Description

### Technical Field

Embodiments of the present disclosure relate to the field of communications, and in particular, to a logical cell status update method, a base station, a terminal, and a storage medium.

### Background

According to the latest version of the 3rd Generation Partnership Project (3 GPP)New Radio (NR) standard, a plurality of logical cells may share one physical cell.When one of the plurality of logical cells is updated from a service status to a non-service status (for example, the logical cell is deleted), it is necessary to update logical cell information carried in a physical cell broadcast message 1 (e.g., System Information Block 1 (SIB1)).Specifically, it is neededto delete a Public Land Mobile Network(PLMN)identityindex and a PLMN identity of the corresponding logical cell from a PLMN identity list within the SIB 1. However, User Equipment (UE) in a process of accessing th edeleted logical cell has not received the updated SIB1, and may send thePLMN identity index of the logical cell to a NG NodeB (gNB) according to thePLMN identity list contained in the old SIB1. The base station still normally executes an access procedure according to the PLMN identity list contained in the new SIB1. Since PLMN information about the logical cell has been deleted from the PLMN identity list contained in the new SIB1, if the base station does not end the access procedure of the UE in time,a waste of cell resourcesmay be resulted; or, if the base station maps the PLMN identity index carried by the UE to another logical cell,anaccess procedure of the UE may be incorrectly executedin the other logical cell, which in turn leads to authentication failure at the core network and finally leads to access failure of the UE, thus resulting in a large number of UE access failures in the deletion process of the logical cell.

Documents WO 2019/214731 A1,US 2016/35336 A1, and ERICSSION: "Further aspects of SNPN", 3GPP DRAFT R2-1912360 provide related technical solutions; however, the above mentioned problem still remains unsolved.

### Summary

Embodiments of the present disclosure mainly provide a logical cell status update method, a base station, a terminal, and a storage medium, which can solve the problem in the related art that in the process of updating a logical cell to a non-service status, when a UE not receiving a newphysical cell broadcast message initiates cell access to a base station by using a PLMN identity list in an old physical cell broadcast message, the base station still normally executes the access procedure, which causes access failure and resource waste.

The present disclosure is set out in the appended set of claims.

The embodiments of the present disclosure provide a logical cell status update method, including:
in a case where alogical cellin one or more logical cells that sharea physical cell is configured from a service status to a non-servicestatus, updating a PLMN identity list contained in a physical cell broadcast message of the physical cell by retaining a Public Land Mobile Network (PLMN)identity index corresponding to the logical cell in a PLMN identity list contained in the physical cell broadcast message and setting a PLMN identity corresponding to the PLMN identity index to a target identity, wherein the target identity is used for indicating that the logical cell is in the non-service status; and
sending the physical cell broadcast message after the update to a terminal.

The embodiments of the present disclosure provide a logical cell status update method, including:
receiving a physical cell broadcast message; and
in a case of detecting thatinaPublic Land Mobile Network (PLMN)identity list contained in the physical cell broadcast message,aPLMN identitycorresponding to a PLMN identity index is a target identity which indicates that a logical cell is in a non-service status, setting the logical cell corresponding to the PLMN identity indexto be in the non-service status.

The embodiments of the present disclosure provide a base station, including a first processor, a first memory, and a first communication bus connecting the first processor and the first memory.

The first memory stores a first computer program, and the first computer program is executed by the first processor to implement operations of the logical cell status update methodfrom the perspective of a base station as described above.

The embodiments of the present disclosure provide a terminal, including a second processor, a second memory, and a second communication bus connecting the second processor and the second memory.

The second memory stores a second computer program,and the second computer program is executed by the second processor to implement operations of the logical cell status update methodfrom the perspective of a terminal as described above.

The embodiments of the present disclosure provide a computer-readable storage medium. The computer-readable storage medium stores a first computer program,and the first computer program is executed by a first processor to implement operations of the logical cell status update methodfrom the perspective of a base station.

Alternatively, the computer-readable storage medium stores a first computer program,and the first computer program is executed by a first processor to implement operations of the logical cell status update methodfrom the perspective of a terminal.

Additional features and corresponding advantages of the present disclosure will be set forth in the description which follows, and in part will be readily apparent from the description.

### Brief Description of the Drawings

Fig. 1 is a schematic flowchart of a logical cell status update methodfrom the perspective of a base station according to a first embodiment of the present disclosure;
Fig. 2 is a schematic flowchart of a UE connection procedure according to a first embodiment of the present disclosure;
Fig. 3 is a schematic flowchart of a logical cell status update methodfrom the perspective of a terminal according to a first embodiment of the present disclosure;
Fig. 4 is a schematic flowchart of a process of setting a logical cell back to a servicestatus according to a first embodiment of the present disclosure;
Fig. 5 is a schematic flowchart of a process of deleting PLMN information according to a first embodiment of the present disclosure;
Fig. 6 is a schematic structural diagram of a logical cell status update apparatusfrom the perspective of a base station according to a second embodiment of the present disclosure;
Fig. 7 is a schematic structural diagram of a logical cell status update apparatusfrom the perspective of a terminal according to a second embodiment of the present disclosure;
Fig. 8 is a schematic diagram of a process of blocking a logical cell according to a second embodiment of the present disclosure;
Fig. 9 is a schematic flowchart of a process of deleting a logical cell according to a second embodiment of the present disclosure;
Fig. 10 is a schematic flowchart of a process of deactivating a logical cell according to a second embodiment of the present disclosure;
Fig. 11 is a schematic flowchart of a UE connection procedure according to a second embodiment of the present disclosure;
Fig. 12 is a schematic flowchart of a process of de-blocking a logical cell according to a second embodiment of the present disclosure;
Fig. 13 is a schematic flowchart of a process of deleting PLMN information according to a second embodiment of the present disclosure;
Fig. 14 is a schematic structural diagram of a base station according to a third embodiment of the present disclosure; and
Fig. 15 is a schematic structural diagram of a terminal according to a third embodiment of the present disclosure.

### Detailed Description

To make the objectives, technical solutions, and advantages of the present disclosure clearer and more comprehensible, the following further describes the embodiments of the present disclosure in detail with reference to the accompanying drawings and exemplaryimplementations. It should be understood that the embodiments described herein are only intended to explain the present disclosure, but not to limit the present disclosure.

### First embodiment

In the related art, a plurality of logical cells mayshare one physical cell.When one of the plurality of logical cells is deleted, blocked or deactivated, a PLMN identity index and a PLMN identity of the logical cell are deleted from a PLMN identity list corresponding to the physical cell, and a terminal is notified of the update via an SIB1. For example, assuming that logical cells 1-5 currently share one physical cell, as shown in Table 1, a PLMN identity list corresponding to the physical cell includes PLMN identity indexes and PLMN identities of the five logical cells, and PLMN identities corresponding to the PLMN identity indexes 1-5 in Table 1 are respectively PLMN identities corresponding to logical cells 1-5 on a one-to-one basis.

**Table 1**

| 'PLMN identity index | PLMN identity |
|---|---|
| 1 | A |
| 2 | B |
| 3 | C |
| 4 | D |
| 5 | E |

Assuming that logical cell 2 is deleted at a certain moment, the aboveTable 1 will be updated to the following Table 2, which is notified to the terminal by a physical cell broadcast message. The PLMN identities corresponding to the PLMN identity indexes 1-4 in Table 2 are the PLMN identities corresponding to logical cells 1 and 3-5 on a one-to-one basis.

**Table 2**

| PLMN identity index | PLMN identity |
|---|---|
| 1 | A |
| 2 | C |
| 3 | D |
| 4 | E |
| | |

When some terminals in an access procedure do not receive the physical cell broadcast message, and initiate a request for accessing logical cell 2 to a base station according to Table 1,after receiving the request, the base station maps the receivedPLMN identity index of logical cell 2 to thePLMN identity index 2 in Table 2, in which the PLMN identity index 2 is actually a PLMN identity index corresponding to the logical cell 3.However, the base station does not know that the terminal does not receive the new physical cell broadcast message, and therefore the base station executes a subsequent access flow normally.In such a case, a resource waste or a terminal access failure occurs,which prolongs the subsequent flow that the terminal successfully accesses.

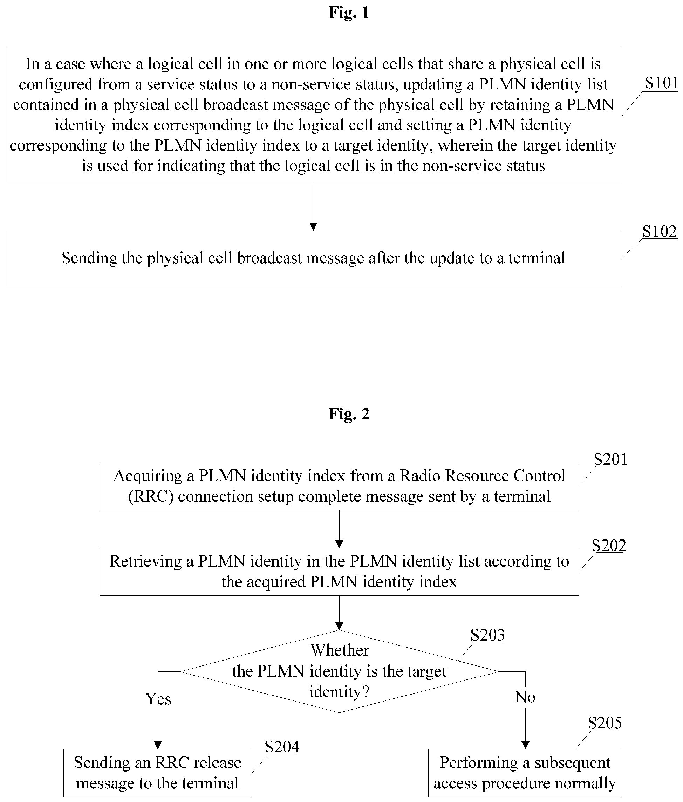

The present embodiment provides a logical cell status update method which is capable of properly solving the described problem. Referring to Fig. 1, the method includes operations S101 and S102.

At S101,in a case where alogical cellin one or more logical cells that sharea physical cell is configured from a service status to a non-servicestatus, a PLMN identity list contained in a physical cell broadcast message of the physical cell is updated by retaining a PLMNidentity index corresponding to the logical cell and setting a PLMN identity corresponding to the PLMN identity index to a target identity which indicates that the logical cell is in the non-servicestatus.

At S102,the physical cell broadcast message after the update is sent to a terminal. It should be understood that the physical cell broadcast message herein may be SIB1.

That is, in this embodiment, when a logical cellin one or more logical cells that share a physical cell is switched from a servicestatus to a non-servicestatus, a PLMN identity index and a PLMN identity corresponding to the logical cell are not simply deletedin a PLMN identity list contained in a physical cell broadcast message of the physical cell. Instead,the PLMN identity index (that is, a position of the PLMN identity corresponding to the logical cell in the PLMN identity list) and the PLMN identity corresponding to the logical cell are retained (kept/maintained). Taking the foregoing example as an example, if logical cells 1 to 5 are currently set to share one physical cell, the PLMN identity list of the physical cellat the initial moment is shown in Table 1. Assuming that logical cell 2 is switched to the non-servicestatus at a certain moment, the above Table 1 will be updated to the following Table 3 and notified to the terminal through a physical cell broadcast message. The PLMN identities corresponding to the PLMN identity indexes 1-5 in Table 2 are still the PLMN identities corresponding to the logical cells 1-5 on a one-to-one basis.

**Table 3**

| PLMN identity index | PLMN identity |
|---|---|
| 1 | A |
| 2 | Target identity |
| 3 | C |
| 4 | D |
| 5 | E |

When some terminals in an access procedure do not receive the physical cell broadcast message, and initiate a request for accessing logical cell 2 to a base station according to Table 1,after receiving the request, the base station maps thePLMN identity index of logical cell 2 to a PLMN identity index 2 in Table 3, in which the PLMN identity index 2 in Table 3 is actually still a PLMN identity index corresponding to logical cell 2.However, the base station findsthat in Table 3 the identity corresponding to the PLMN identity index is a target identity, so that the base station is aware of the fact that logical cell 2 is currently in a non-servicestatus,therefore, the base station can instantly terminate the processing of the access procedure of the terminal, thereby not only improving the resource utilization rate, but also reducing the probability of terminal access failure, and avoiding the occurrence of a large number of terminal access failures whichcauses a KPI drop. At the same time, the terminal can re-initiate access to another logical cell in a service status as soon as possible, thereby shortening the subsequent re-accessflow of the terminal, improving the access efficiency of the terminal, and further improving the satisfaction degree of user experience.

In this embodiment, after S102, a process when an RRC connection request sent by a terminal is received is shown in Fig. 2, including operations S201 to S205.

At S201,a PLMN identity index isacquired from a Radio Resource Control (RRC) connection setup complete message sent by a terminal.

At S202, a corresponding PLMN identity is retrieved in a PLMN identity list according to the acquired PLMN identity index.

At S203,whether the retrievedPLMN identity is a target identity is determined, and if so, the process proceedsto S204; otherwise, the process proceeds to S205.

At S204,an RRC release message is sent to the terminal to terminate the terminal access procedure.

At S205,a subsequent access procedure is performed normally.

It should be understood that, the process operations in Fig. 1 and Fig. 2 are executed by, but not limited to, a base station.

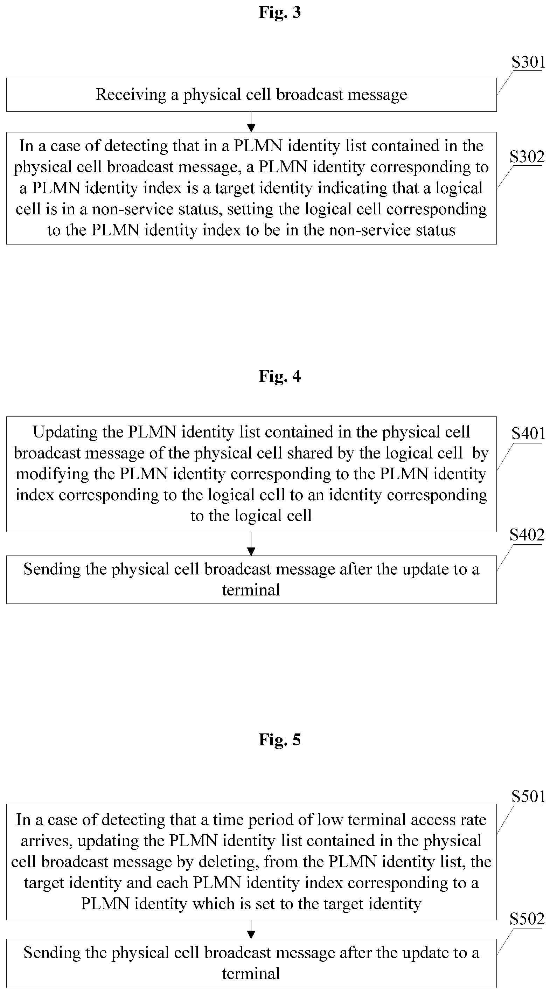

Correspondingly, from the perspective of a terminal, when the terminal receives a physical cell broadcast message, a logical cell status update methodfrom the perspective of a terminal is shown in Fig. 3, including operations S301 and S302.

At S301,a physical cell broadcast message is received.

At S302,in a case of detecting thatinaPublic Land Mobile Network (PLMN)identity list contained in the physical cell broadcast message,aPLMN identitycorresponding to a PLMN identity index is a target identity which indicates that a logical cell is in a non-service status, the logical cell corresponding to the PLMN identity index is set to be in the non-service status.

Taking the foregoing example shown in Table 3 as an example, when the terminal finds, from the received PLMN identity list of the physical cell broadcast message, that the PLMN identity corresponding to the PLMN identity index 2 is the target identity, the terminal may synchronously set that logical cell 2 is switched from the servicestatus to the non-servicestatus.

It should be understood that, in this embodiment, the case where the logical cellin the one or more logical cellsthat sharethe physical cell is configured from the service status tothenon-servicestatus may include, but is not limited to,at least one of:
deleting the logical cell;
blocking the logical cell; and
deactivating the logical cell.

It should be understood that, in this embodiment, the target identity for indicating that the logical cell is not in the servicestatus (or is in the non-service status) may be set flexibly, as long as the base station and the terminal can determine, according to the target identity, that the corresponding logical cell is not in the servicestatus. For example, the target identity may be set as PLMN: MCC (Mobile Country Code): 999, MNC (Mobile Network Code): 999, which is reserved in ITU-T E.212 for private networks.

In some exemplary implementations, when a logical cellin one or more logical cells that sharea physical cell is switched from a servicestatus to a non-servicestatus, in the PLMN identity list, the cellReservedForOperatorUse information elementof the logical cell may also be set as a reserved. In this way, after receiving the physical cell broadcast message, when identifying that the cellReservedForOperatorUse information element corresponding to a certain logical cell is set as reserved, the terminal may further determine that the logical cell is not in a servicestatus, and may further improve the accuracy of cell status update.

In some exemplary implementations, when a logical cellin one or more logical cells that sharea physical cell is switched from a servicestatus to a non-servicestatus, at least one of a tracking area code and a radio access network area code of the logical cell may also be removed from a PLMN identity list, thereby reducing the occupation of resources and improving the resource utilization rate.

In this embodiment, when the service status of the logical cell is set to be the non-service status, the PLMN identity index corresponding to the logical cell is retained in the PLMN identity list corresponding to the physical cell shared by the one or more logical cells, In some exemplary implementations, before a physical cell broadcast message is generated based on the updated PLMN identity list and is sent to the terminal, the method mayfurther include, but is not limited to, at least one of the following operations:
setting, in the PLMN identity list,a reserved cell information element of the logical cellto a reservedstatus;
removing atracking area code of the logical cell from the PLMN identity list; and
removing aradio access network area code of the logical cell from the PLMN identity list.

In some exemplary implementations,in a case where thelogical cellin the one or more logical cellsthat sharethe physical cell is configured from thenon-servicestatusto the service status, as shown in Fig. 4, the method may further include operations S401 and S402.

At S401,the PLMN identity list contained in the physical cell broadcast message is updatedby modifying the PLMN identity corresponding to the PLMN identity index corresponding to the logical cell from the target identity to an identity corresponding to the logical cell,for example, an original identity corresponding to the logical cell.

At S402,the physical cell broadcast message after the update is sent to a terminal. It should be understood that the physical cell broadcast message herein may be SIB1.

It should be understood that the operations shown in Fig. 4 may also be executed by, but not limited to, a base station. In this embodiment, when a logical cell is switched from a servicestatus to a non-servicestatus, a PLMN identity index corresponding to the logical cell is retained in a PLMN identity list. Therefore, when the logical cell is switched from the non-servicestatus to the servicestatus, a PLMN identity corresponding to the PLMN identity index corresponding to the logical cell may be directly set in the PLMN identity list to an original identity, so that the PLMN identity index does not need to be reset in the PLMN identity list, thereby improving processing efficiency and improving resource utilization.

For example, taking the case shown in the above Table 3 as an example, assuming that the logical cell is set to be in the servicestatus from the non-servicestatus (for example, the logical cell 3 is blocked before, and is subsequently de-blocked), correspondingly, in the Table 3, the PLMN identity corresponding to the PLMN identity index corresponding to logical cell 2 is set back to the original identity B.

In some exemplary implementations, in order to improve the resource utilization rate of the PLMN identity list and avoid the above problem as far as possible,after the operation S102 of generating the physical cell broadcast message according to the updated PLMN identity list and sending the physical cell broadcast message to the terminal, as shown in Fig. 5, the methodmay further include, but not limited to, operations S501and S502.

At S501,in a case of detecting that a current time is in a time period of low terminal access rate, the PLMN identity list contained in the physical cell broadcast message is updatedby deleting, from the PLMN identitylist, the target identity and each PLMN identity index corresponding to a PLMN identitywhich is set to the target identity.

At S502,the physical cell broadcast message after the update is sent to a terminal. It should be understood that, the physical cell broadcast message herein may also be SIB1.

In this embodiment, the time period of low terminal access rate refers to a time period in which the probability that the terminal initiates access is low, for example, a time period from 0:00 to 4:00. In the present embodiment, each PLMN identity index, of which a PLMN identity corresponding to thePLMN identity index is a target identity, is deleted from the PLMN identity list and the PLMN identity list is sent to the terminal via a physical cell broadcast message in the time period of low terminal access rate, the occurrence of the described problem can be avoided as far as possible. At the same time, thePLMN identity index and thePLMN identity corresponding to thelogical cell which is not in theservicestatus are clearedfromthe PLMN identity list so as to release resources occupied by the PLMN identity list, thereby improving the resource utilization rate.

For example, taking the case shown in the above Table 3 as an example, if it is detected that logical cell 2 is still in a non-servicestatuswhenthe time period of low terminal access rate arrives, then the PLMN identity index 2 corresponding to logical cell 2 and the corresponding PLMN identity (which is currently the target identity) in Table 3 maybe cleared, as shown inTable 2, so that resources occupied by the PLMN information corresponding to logical cell 2are released, avoiding long-time occupation of resources, and improving the rationality of resource utilization.

It can be seen that, by adopting the logical cell status update method provided by the present embodiment, the problem that a gNB may identify and select an incorrect PLMN for the UE if a corresponding PLMN identity index and a PLMN identity are directly deleted and then the PLMN identity list issent to a terminal through an air interface SIB1under the condition that a logical cell sharing a physical cell is deleted, blockedor deactivated may be solved, and an error in PLMN selection for a UE is easily recognized by a gNB. The solution canensurethat a selectedPLMN-Identity information element carried in theUE access procedure can be correctly mapped to a corresponding PLMN identity index under the condition that the air interface message (i.e., SIB 1) is updated, and a non-service status of the logical cell can be recognized based on the fact that the PLMN identity corresponding to the PLMN identity index carried by the UE is the target identity, so that the UE access procedurecan beterminated in time, thereby avoiding a KPI drop caused by a large number of UE access failures.

### Second embodiment

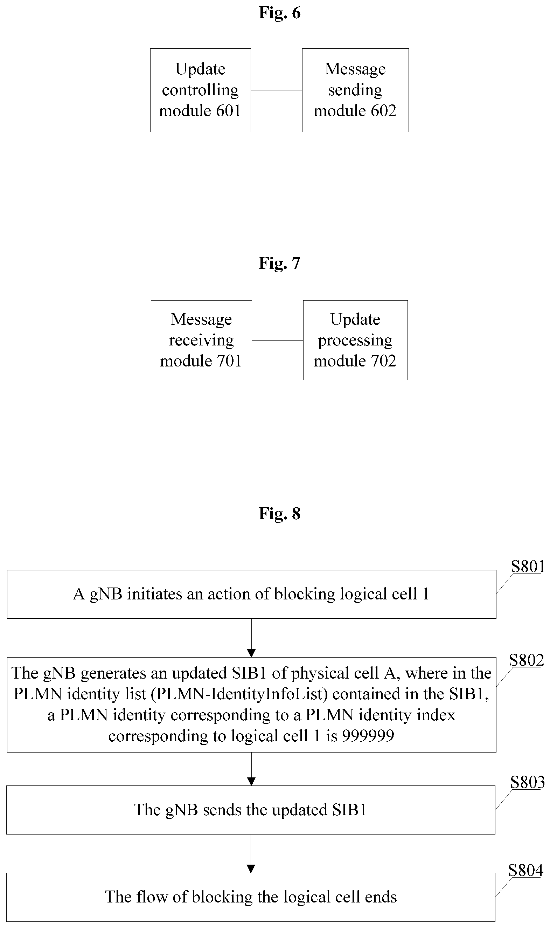

For ease of understanding, based on the foregoing embodiments, this embodiment provides a logical cell status update apparatus that may be set on, but is not limited to, a base station. Referring to Fig. 6, the apparatus includes: an update controlling module 601 and a message sending module 602.

Theupdate controlling module 601 isconfigured toupdate, in a case where alogical cellin one or more logical cells that sharea physical cell is configured from a service status to a non-servicestatus,a Public Land Mobile Network (PLMN)identity list contained ina physical cell broadcast message of the physical cell by retaining a PLMNidentity index corresponding to the logical cell and setting a PLMN identity corresponding to the PLMN identity index to a target identity, wherein the target identity is used for indicating that the logical cell is in the non-service status.For a specific update process, reference is made to the foregoing embodiment, and details are not repeatedly described herein.

Themessage sending module 602 is configured to send the physical cell broadcast message after the update to a terminal. For a specific sending process, reference is made to the foregoing embodiment, and details are not repeatedly described herein.

It should be understood that, functions of the update controlling module 601 and the message sending module 602 in this embodiment may be implemented by, but not limited to, a processor of the base station. Furthermore, the update controlling module 601 may further implement functions corresponding to the operations shown in Figs. 2 and 4-5 in the foregoing embodiments.

For ease of understanding, based on the foregoing embodiments, this embodiment provides a logical cell status update apparatus that may be disposed on, but is not limited to, a terminal. Referring to Fig. 7, the apparatus includes: a message receiving module 701 and an update processing module 702.

Themessage receiving module 701 isconfigured to receive a physical cell broadcast message.

The update processing module 702 is configured to,in a case of detecting thatinaPublic Land Mobile Network (PLMN)identity list contained in the physical cell broadcast message,aPLMN identitycorresponding to a PLMN identity index is a target identity which indicates that a logical cell is in a non-service status, set the logical cell corresponding to the PLMN identity indexto be in the non-service status.

For ease of understanding, this embodiment is further described below with several application examples of the logical cell status update apparatusfrom the perspective of a base station and the terminal side.

### Application example 1

Assuming that logical cell 1 and logical cell 2 share one physical cell A, an exemplary process of blockinglogical cell 1 and updating an air interface message (i.e., SIB1) of the physical cell is shown in Fig. 8, and the exemplary process includes the following operations.

At S801,a gNB (an exemplary base station) initiates a procedure of blockinglogical cell 1.

At S802,the gNB generates an updated SIB1 of physical cell A. In the PLMN identitylist(PLMN-IdentityInfoList) contained in the SIB1, a PLMN identity corresponding to aPLMN identity index corresponding to logical cell 1 is 999999.

In some exemplary implementations, in the PLMN-IdentityInfoList contained in the SIB1 of physical cell A, the cellReservedForOperatorUse corresponding to logical cell 1 is set as reserved, and the information elementstrackingAreaCode and ranac are not carried anymore.

At S803,the gNB sends the updated SIB1.

At S804,the flow of blocking the logical cell ends.

### Application example 2

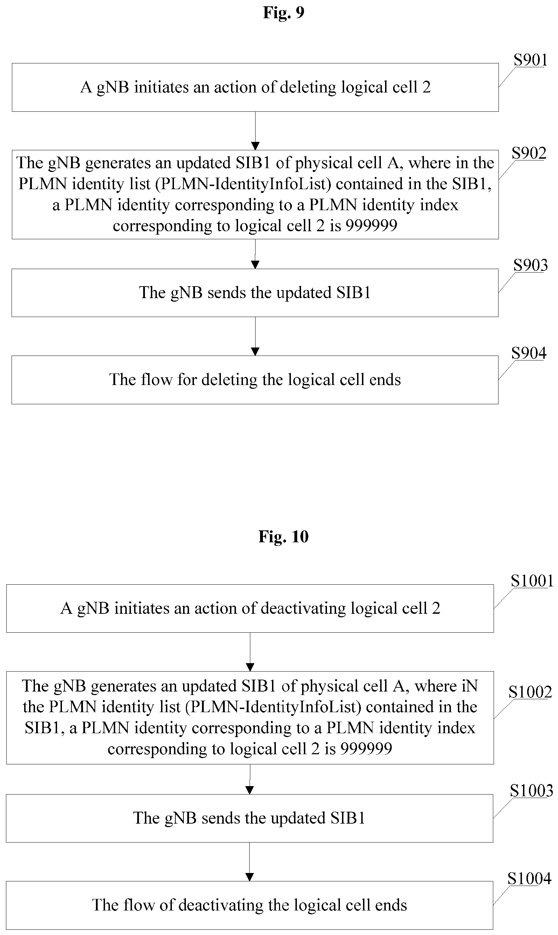

Assuming that logical cell 1 and logical cell 2 share one physical cell A, an exemplary process of deletinglogical cell 2 and updating an air interface message (i.e., SIB1) of the physical cell is shown in Fig. 9, and the exemplary process includes the following operations.

At S901,a gNB initiates a procedure of deletinglogical cell 2.

At S902,the gNB generates an updated SIB1 of physical cell A. In the PLMN identitylist(PLMN-IdentityInfoList) contained in the SIB1, a PLMN identity corresponding to a PLMN identity index corresponding to logical cell 2 is 999999.

In some exemplary implementations, in the PLMN-IdentityInfoList contained in the SIB1 of physical cell A, the cellReservedForOperatorUse corresponding to logical cell 2is set as reserved, and the information elements trackingAreaCode and ranac are not carried anymore.

At S903, the gNB sends the updated SIB1.

At S904,the flow for deleting the logical cell ends.

### Application example 3

Assuming thatlogical cell 1 and logical cell 2 share one physical cell A, an exemplary process of deactivating logical cell 2 and updatingan air interface message (i.e., SIB1) of the physical cell is shown in Fig. 10, and the exemplary process includes the following operations.

At S1001,agNB initiates a procedureof deactivatinglogical cell 2.

At S1002,the gNB generates an updated SIB1 of physical cell A. In the PLMN identitylist(PLMN-IdentityInfoList) contained in the SIB1, aPLMN identity corresponding to aPLMN identity index corresponding to logical cell 2 is 999999.

In some exemplary implementations, in the PLMN-IdentityInfoList contained in the SIB1 of physical cell A, the cellReservedForOperatorUse corresponding to logical cell 2is set as reserved, and the information elements trackingAreaCode and ranac are not carried anymore.

At S1003,the gNB sends the updated SIB1.

At S1004,the flow of deactivating the logical cellends.

### Application example 4

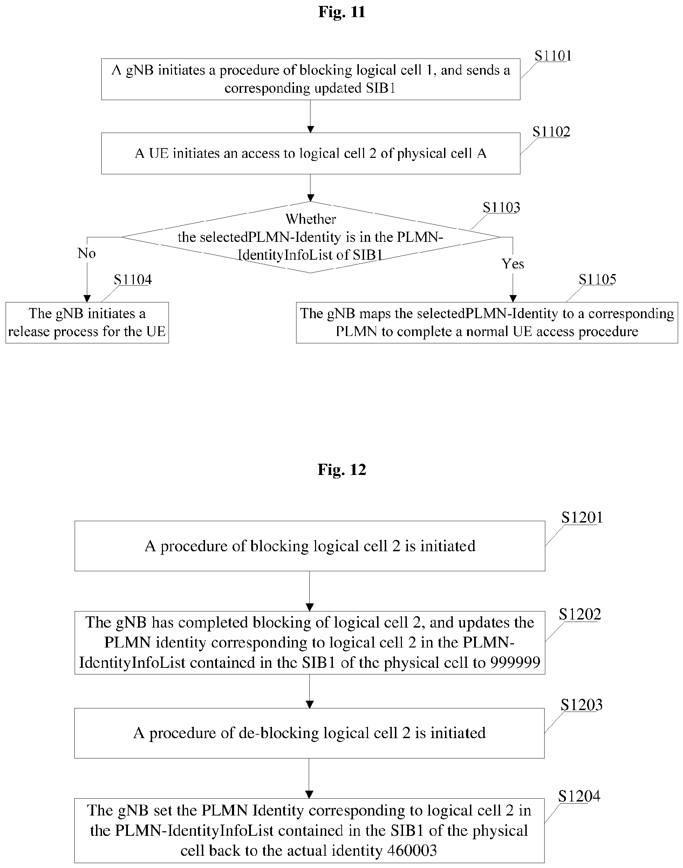

Following the above application example 1, assuming that logical cell 1 and logical cell 2 share one physical cell A, an exemplary process of PLMN mapping in responsive to UE access afterlogical cell 1 is blocked andan air interface message (i.e., SIB1) of the physical cell is updated is shown in Fig. 11, and the exemplary process includes the following operations.

At S1101,agNB initiates aprocedureof blockinglogical cell 1, and sends a corresponding updated SIB1.

At S1102,aUE initiates an access to logical cell 2 of physical cell A.

At S1103,the gNB receives selectedPLMN-Identity carried in the RRCSetupComplete and judges whether the selectedPLMN-Identity is in the PLMN-IdentityInfoList of SIB1, if not, the process proceeds to S1104; otherwise, the process proceeds to S1105.

At S1104,the gNB initiates a release process for the UE, and sends to the UE an RRCRelease message carrying deprioritisationReq.

At S1105,the gNB maps the selectedPLMN-Identity to a corresponding PLMN to complete a normal UE access procedure.

The processes of PLMN mapping in responsive to UE access in the procedure of deletion and deactivation of the logical cell are similar to that shown in Fig. 11, and are not repeated here any further.

### Application example 5

Assuming thatlogical cell 1 and logical cell 2 share one physical cell A, where the PLMN identity of logical cell 1 is 46001, and the PLMN identity of logical cell 2 is 46003, an exemplary process of de-blocking after logical cell 2 is blocked andan air interface message (i.e., SIB1) of the physical cell is updated is shown in Fig. 12, and the exemplary process includes the following operations.

At S1201,a procedure of blocking logical cell 2 is initiated.

At S1202,the gNB has completed blocking of logical cell 2, and updates the PLMN identity corresponding to logical cell 2 in the PLMN-IdentityInfoList contained in the SIB1 of the physical cell to 999999.

At S1203, a procedure of de-blocking logical cell 2is initiated.

At S1204,the gNB set the PLMN identity corresponding to logical cell 2 in the PLMN-IdentityInfoList contained in the SIB1 of the physical cellback to the actual identity460003.

### Application example 6

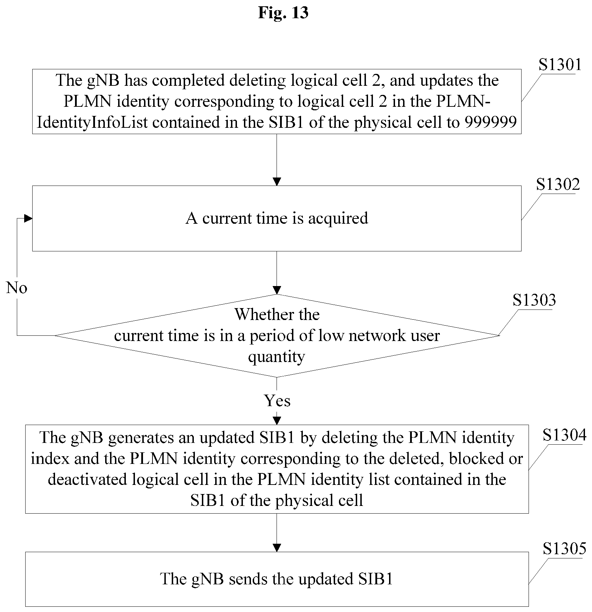

Assuming thatlogical cell 1 and logical cell 2 share one physical cell A,logical cell 2 is deleted andan air interface message (i.e., SIB1) of the physical cell is updated, when a period of low network user quantity arrives, an exemplary process of updating the air interface message (i.e., SIB1)to delete PLMN information corresponding to the logical cell which is in a non-service status is shown in Fig. 13, and the exemplary process includes the following operations.

At S1301,the gNB has completed deletinglogical cell 2, and updates the PLMN identity corresponding to logical cell 2 in the PLMN-IdentityInfoList contained in the SIB1 of the physical cell to 999999.

At S1302,a current time is acquired.

At S1303,the gNB judges whether the current time is in a period of low network user quantity (such as 2: 00 a. m.), if so, the flow proceeds to S1304; otherwise, the flow proceeds to S1302.

At S1304,the gNB generates an updated SIB1 by deleting the PLMN identity index and the PLMN identity corresponding to the deleted, blocked or deactivated logical cell in the PLMN identitylist contained in the SIB1 of the physical cell.

At S1305, the gNBsends the updated SIB1.

### Third embodiment

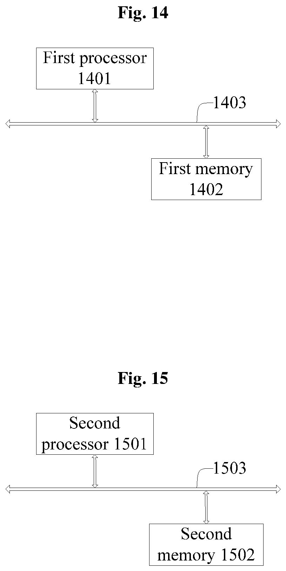

This embodiment provides a base station. Referring to Fig. 14, the base station includes a first processor 1401, a first memory 1402, and a first communications bus 1403 connecting the first processor 1401 and the first memory 1402.

The first memory 1402 stores a first computer program. The first computer program may be executed by the first processor 1401, so as to implement the operations of the logical cell status update methodfrom the perspective of a base stationaccording to the foregoing embodiments.

This embodiment provides a terminal. Referring to Fig. 15, the terminal includes a second processor 1501, a second memory 1502, and a second communication bus 1503 connecting the second processor 1501 and the second memory 1502.

The second memory 1502 stores a second computer program. The second computer program may be executed by the second processor 1501 to implement the operations of the logical cell status update methodfrom the perspective ofa terminal according to the foregoing embodiments.

The present embodiment provides a computer-readable storage medium. The computer-readable storage medium stores a first computer program. The computer program maybe executed by a first processor to implement the operations of the logical cell status update methodfrom the perspective of a base stationaccording to the above embodiments;

Alternatively, the computer-readable storage medium stores a second computer program, and the computer program maybe executed by the second processor, so as to implement the operations of the logical cell status update methodfrom the perspective of a terminalaccording to the above embodiments.

The computer-readable storage medium in this embodiment may be provided on, but is not limited to, a base station, for example, a BBU of a base station, including volatile or non-volatile, removable or non-removable media implemented in any method or technology for storage of information, such as computer-readable instructions, data structures, computer program modules, or other data. Computer-readable storage media includes, but is not limited to, RAM (Random Access Memory), ROM (Read-Only Memory), EEPROM (Electrically Erasable Programmable read only memory), flash memory or other memory technology, CD-ROM (Compact Disc Read-Only Memory), Digital Versatile Disk (DVD) or other optical disk storage, magnetic cassettes, magnetic tape, magnetic disk storage or other magnetic storage devices, or any other medium which can be used to store the desired information and which can be accessed by a computer.

This embodiment provides a first computer program (or referred to as computer software). The first computer program may be distributed on a computer-readable medium and executed by a computer-readable device, so as to implement the operations in the logical cell status update methodfrom the perspective of a base station as described above. Furthermore, in some cases, at least one operation shown or described may be executed in a sequence different from that described in the foregoing embodiments.

This embodiment provides a second computer program (or referred to as computer software). The second computer program may be distributed on a computer-readable medium and executed by a computing apparatus, so as to implement the operations of the logical cell status update methodfrom the perspective of a terminal as described above.Furthermore, in some cases, at least one operation shown or described may be executed in a sequence different from that described in the foregoing embodiments.

The embodimentsprovide a computer program product, which includes a computer-readable device, and any one of the computer programs as shown in the foregoing is stored in the computer-readable device. The computer-readable apparatus in this embodiment may include the foregoing computer-readable storage medium.

Provided are a logical cell status update method and apparatus, a base station, a terminal, and a storage medium. The method includes: in a case where alogical cellin one or more logical cells that sharea physical cell is configured from a service status to a non-servicestatus, a PLMN identity list contained in a physical cell broadcast message of the physical cell is updatedby retaining a PLMNidentity index corresponding to the logical cell and setting a PLMN identity corresponding to the PLMN identity index to a target identity, wherein the target identity is used for indicating that the logical cell is in the non-service status; and the physical cell broadcast message after the update is sent to a terminal.In this way, even if a terminal which does not receive the physical cell broadcast message uses a PLMN identity list in an old physical cell broadcast message to initiate access to a logical cell which has been switched to a non-service status to the base station, since the updated PLMN identity list retains a PLMN identity index position corresponding to the logical cell, the base station can accurately map to the PLMN identity index corresponding to the logical cellin the updated PLMN identity list, and can find that a corresponding PLMN identity is currently a target identity for indicatingthat the logical cell is in the non-servicestatus, so that the base station can terminate the access procedure as early as possible, thereby avoiding the continuous processing of the access procedure, and not only can the resource utilization be improved, but also the probability of terminal access failure can be reduced.

It can be seen that those skilled in the art should understand that the functional modules/units in all or some of the operations, systems and apparatuses in the methods disclosed above may be implemented as software (which may be implemented by computer program codes executable by a computing apparatus), firmware, hardware and appropriate combinations thereof. In a hardware implementation, the division between functional modules/units referred to in the above description does not necessarily correspond to the division of physical components; for example, one physical component may have multiple functions, or one function or operation may be cooperatively performed by several physical components. Some or all of the physical components may be implemented as software executed by a processor, such as a central processor, digital signal processor, or microprocessor, or as hardware, or as an integrated circuit, such as an application specific integrated circuit.

In addition, communication media typically embodies computer-readable instructions, data structures, computer program modules, or other data in a modulated data signal such as a carrier wave or other transport mechanism, and may include any information delivery media, as known to those having ordinary skill in the art. Hence, the present disclosure is not limited to any particular combination of hardware and software.

The foregoing content is further detailed description of the embodiments of the present disclosure with reference to specific embodiments, and it cannot be considered that the specific implementation of the present disclosure is only limited to these descriptions. For a person having ordinary skill in the art to which the present disclosure belongs, on the premise of keeping the conception of the present disclosure, a number of simple deductions or replacements may also be made, and all of which should be considered to belong to the protection scope of the present disclosure, as long as they fall under the scope of the appended claims.

## Claims

1. A logical cell status update method, performed by a base station, comprising:
in a case where a logical cell in one or more logical cells that share a physical cell is configured from a service status to a non-service status, updating (S101) a Public Land Mobile Network, PLMN, identity list contained in a physical cell broadcast message of the physical cell by retaining a PLMN identity index corresponding to the logical cell and setting a PLMN identity corresponding to the PLMN identity index to a target identity which indicates that the logical cell is in the non-service status; and
sending (S102)the physical cell broadcast message after the update to a terminal.

2. The logical cell status update method according to claim 1, wherein the case where the logical cellin the one or more logical cellsthat sharethe physical cell is configured from the service status tothenon-servicestatus comprises at least one of:
deleting the logical cell;
blocking the logical cell; and
deactivating the logical cell.

3. The logical cell status update method according to claim 1, wherein before sending (S102)the physical cell broadcast message after the update to the terminal, the method further comprises at least one of:
setting, in the PLMN identity list,a reserved cell information element of the logical cellto a reservedstatus;
removing atracking area code of the logical cell from the PLMN identity list; and
removing aradio access network area code of the logical cell from the PLMN identity list.

4. The logical cell status update method according to claim 1, wherein the method further comprises:in a case where thelogical cellin the one or more logical cellsthat sharethe physical cell is configured from thenon-servicestatusto the service status,
updating (S401) the PLMN identity list contained in the physical cell broadcast message by modifying the PLMN identity corresponding to the PLMN identity index corresponding to the logical cell from the target identity to an identity corresponding to the logical cell; and
sending (S402)the physical cell broadcast message after the update to a terminal.

5. The logical cell status update method according to any one of claims 1 to 4, wherein after sending (S 102)the physical cell broadcast message after the update to the terminal, the method further comprises:
in a case ofdetectingthat a current time is in a time period of low terminal access rate, updating (S501) the PLMN identity list contained in the physical cell broadcast message by deleting, from the PLMN identitylist, the target identity and each PLMN identity index corresponding to a PLMN identitywhich is set to the target identity; and
sending (S502)the physical cell broadcast message after the update to a terminal.

6. The logical cell status update method according to any one of claims 1 to 4, wherein after sending (S 102)the physical cell broadcast message after the update to the terminal, the method further comprises:
in a case where a PLMN identityretrieved in thePLMN identity list according to a PLMN identity index acquired from a Radio Resource Control, RRC, connection setup complete message sent by a terminal is the target identity, sending (S204) an RRC release message to the terminal.

7. A logical cell status update method, performed by a terminal, comprising:
receiving (S301) a physical cell broadcast message; and
in a case of detecting that in a Public Land Mobile Network, PLMN,identity list contained in the physical cell broadcast message, a PLMN identity corresponding to a PLMN identity index is a target identity which indicates that a logical cell is in a non-service status, setting (S302) the logical cell corresponding to the PLMN identity index to be in the non-service status.

8. The logical cell status update method according to claim 7, wherein in the received physical cell broadcast message:
a reserved cell information element of the logical cell is set to a reservedstatusin the PLMN identity list; and/or
atracking area code of the logical cell is removed from the PLMN identity list; and/or
aradio access network area code of the logical cell is removedfrom the PLMN identity list.

9. A base station, comprising a first processor (1401), a first memory (1402), and a first communication bus (1403) connecting the first processor (1401) and the first memory (1402);
wherein the first memory (1402) stores a first computer program, and the first computer program is executed by the first processor (1401) to implement operations of the logical cell status update method according to any one of claims 1 to 6.

10. A terminal, comprising a second processor (1501), a second memory (1502), and a second communication bus (1503) connecting the second processor (1501) and the second memory (1502);
wherein the second memory (1502) stores a second computer program,and the second computer program is executed by the second processor (1501) to implement operations of the logical cell status update method according to claim 7 or 8.

11. A computer-readable storage medium, wherein the computer-readable storage medium stores a first computer program,and the first computer program is executed by a first processor associated with a base station to cause the base station to perform the steps of the logical cell status update method according to any one of claims 1 to 6.

12. A computer-readable storage medium, wherein the computer-readable storage medium stores a second computer program, and the second computer program is executed by a second processor associated with a terminal to cause the terminal to perform the steps of the logical cell status update method according to claim 7 or 8.

## Patentansprüche

1. Verfahren zur Aktualisierung des Zustands logischer Zellen, das von einer Basisstation ausgeführt wird, umfassend,
in einem Fall, wenn eine logische Zelle in einer oder mehreren logischen Zellen, die eine physische Zelle teilen, von einem Dienstzustand zu einem Nichtdienstzustand konfiguriert ist, Aktualisieren (S101) einer öffentliches terrestrisches Mobilfunknetz, PLMN, Identitätsliste, die in einer physische Zelle-Rundfunknachricht der physischen Zelle enthalten ist, durch Beibehalten eines PLMN-Identitätsindex, der der logischen Zelle entspricht, und Einstellen einer PLMN-Identität, die dem PLMN-Identitätsindex entspricht, auf eine Zielidentität, die anzeigt, dass sich die logische Zelle im Nichtdienstzustand befindet;
Senden (S102) der physische Zelle-Rundfunknachricht nach der Aktualisierung an ein Endgerät.

2. Verfahren zur Aktualisierung des Zustands logischer Zellen nach Anspruch 1, wobei der Fall, wenn die logische Zelle der einen oder den mehreren logischen Zellen, die die physische Zelle teilen, von dem Dienstzustand in den Nichtdienstzustand konfiguriert wird, mindestens einen der folgenden Schritte umfasst:
Löschen der logischen Zelle;
Sperren der logischen Zelle; und
Deaktivieren der logischen Zelle.

3. Verfahren zur Aktualisierung des Zustands logischer Zellen nach Anspruch 1, wobei vor dem Senden (S102) der physische Zelle-Rundfunknachricht nach der Aktualisierung an das Endgerät das Verfahren ferner mindestens einen der folgenden Schritte umfasst:
Einstellen, in der PLMN-Identitätsliste, eines reservierten Zelleninformationselements der logischen Zelle auf einen reservierten Zustand;
Entfernen eines Tracking-Bereichscodes der logischen Zelle aus der PLMN-Identitätsliste; und
Entfernen eines Funkzugangsnetzwerk-Bereichscodes der logischen Zelle aus der PLMN-Identitätsliste.

4. Verfahren zur Aktualisierung des Zustands logischer Zellen nach Anspruch 1, wobei das Verfahren ferner umfasst: in einem Fall, wenn die logische Zelle in der einen oder den mehreren logischen Zellen, die die physische Zelle teilen, von dem Nichtdienstzustand in den Dienstzustand konfiguriert wird,
Aktualisieren (S401) der PLMN-Identitätsliste, die in der physische Zelle-Rundfunknachricht enthalten ist durch Ändern der PLMN-Identität, die dem PLMN-Identitätsindex entspricht, der der logischen Zelle entspricht, von der Zielidentität zu einer Identität, die der logischen Zelle entspricht; und
Senden (S402) der physische Zelle-Rundfunknachricht nach der Aktualisierung an ein Endgerät.

5. Verfahren zur Aktualisierung des Zustands logischer Zellen nach einem der Ansprüche 1 bis 4, wobei nach dem Senden (S102) der physische Zelle-Rundfunknachricht nach der Aktualisierung an das Endgerät das Verfahren ferner umfasst:
in einem Fall, dass erkannt wird, dass sich eine aktuelle Zeit in einer Zeitspanne mit geringer Zugriffsrate des Endgeräts befindet, Aktualisieren (S501) der PLMN-Identitätsliste , die in der physische Zelle-Rundfunknachricht enthalten ist durch Löschen, aus der PLMN-Identitätsindex, der Zielidentität und jedes PLMN-Identitätsindex, der einer PLMN-Identität entspricht, die auf die Zielidentität eingestellt wird; und
Senden (S502) der physische Zelle-Rundfunknachricht nach der Aktualisierung an ein Endgerät.

6. Verfahren zur Aktualisierung des Zustands logischer Zellen nach einem der Ansprüche 1 bis 4, wobei, nach dem Senden (S102) der physische Zelle-Rundfunknachricht nach der Aktualisierung an das Endgerät, das Verfahren ferner umfasst:
in einem Fall, wenn eine PLMN-Identität, die in der PLMN-Identitätsliste nach einem PLMN-Identitätsindex wiedergewonnen wird, der aus einer Funk-Ressource-Kontrolle, RRC, Verbindungsanordnung-Vollnachricht erfasst wird, die durch ein Endgerät gesendet wird, eine Zielidentität ist, Senden (S204) einer RRC-Freisetzungsnachricht an das Endgerät.

7. Verfahren zur Aktualisierung des Zustands logischer Zellen, das von einem Endgerät ausgeführt wird, umfassend
Empfangen (S301) einer physische Zelle-Rundfunknachricht; und
in einem Fall, dass erkannt wird, dass eine öffentliches terrestrisches Mobilfunknetz, PLMN-Identitätsliste, die in der physische Zelle-Rundfunknachricht enthalten ist, eine PLMN-Identität, die einem PLMN-Identitätsindex entspricht, eine Zielidentität ist, die anzeigt, dass sich eine logische Zelle in dem Nichtdienstzustand befindet, Einstellen (S302) der logischen Zelle, die dem PLMN-Identitätsindex entspricht, auf den Nichtdienstzustand.

8. Verfahren zur Aktualisierung des Zustands logischer Zellen nach Anspruch 7, wobei in der empfangenen physische Zelle-Rundfunknachricht:
ein reserviertes Zelleninformationselement der logischen Zelle, das in der PLMN-Identitätsliste auf einen reservierten Zustand eingestellt wird; und/oder
ein Tracking-Bereichscode der logischen Zelle aus der PLMN-Identitätsliste entfernt wurde; und/oder
ein Funkzugangsnetz-Bereichscode der logischen Zelle aus der PLMN-Identitätsliste entfernt wurde.

9. Basisstation, umfassend einen ersten Prozessor (1401), einen ersten Speicher (1402) und einen ersten Kommunikationsbus (1403), der den ersten Prozessor (1401) und den ersten Speicher (1402) verbindet;
wobei der erste Speicher (1402) ein erstes Computerprogramm speichert, und das erste Computerprogramm von dem ersten Prozessor (1401) ausgeführt wird, um die Schritte des Verfahrens zur Aktualisierung des Zustands logischer Zellen nach einem der Ansprüche 1 bis 6 auszuführen.

10. Endgerät, umfassend einen zweiten Prozessor (1501), einen zweiten Speicher (1502) und einen zweiten Kommunikationsbus (1503), der den zweiten Prozessor (1501) und den zweiten Speicher (1502) verbindet;
wobei der zweite Speicher (1502) ein zweites Computerprogramm speichert, und das zweite Computerprogramm von dem zweiten Prozessor (1501) ausgeführt wird, um die Schritte des Verfahrens zur Aktualisierung des Zustands logischer Zellen nach Anspruch 7 oder 8 auszuführen.

11. Computerlesbares Speichermedium, wobei das computerlesbare Speichermedium ein erstes Computerprogramm speichert, und das erste Computerprogramm von einem ersten Prozessor, der einer Basisstation zugeordnet ist, ausgeführt wird, um die Basisstation zu veranlassen, die Schritte des Verfahrens zur Aktualisierung des Zustands logischer Zellen nach einem der Ansprüche 1 bis 6 auszuführen.

12. Computerlesbares Speichermedium, wobei das computerlesbare Speichermedium ein zweites Computerprogramm speichert, und das zweite Computerprogramm von einem zweiten Prozessor, der einem Endgerät zugeordnet ist, ausgeführt wird, um das Endgerät zu veranlassen, die Schritte des Verfahrens zur Aktualisierung des Zustands logischer Zellen nach Anspruch 7 oder 8 auszuführen.

## Revendications

1. Un procédé de mise à jour d'état de cellule logique, exécuté par une station de base, comprenant,
dans un cas où une cellule logique parmi une ou plusieurs cellules logiques partageant une cellule physique est configurée, d'un état de service à un état de non-service
la mise à jour (S101) d'une liste d'identités de réseau mobile terrestre public, PLMN, contenue dans un message de diffusion de cellule physique de la cellule physique, en conservant un indice d'identité PLMN correspondant à la cellule logique et en définissant une identité PLMN correspondant à l'indice d'identité PLMN à une identité cible indiquant que la cellule logique est en état de non-service ;
l'envoi (S102) du message de diffusion de cellule physique, après la mise à jour, à un terminal.

2. Le procédé de mise à jour d'état de cellule logique selon la revendication 1, dans lequel le cas où la cellule logique parmi la ou les cellules logiques partageant la cellule physique est configurée de l'état de service à l'état de non-service comprend au moins un des éléments suivants :
la suppression de la cellule logique ;
le blocage de la cellule logique ; et
la désactivation de la cellule logique.

3. Le procédé de mise à jour d'état de cellule logique selon la revendication 1, dans lequel, avant l'envoi (S102) du message de diffusion de cellule physique après la mise à jour au terminal, le procédé comprend en outre au moins un des éléments suivants :
la définition, dans la liste d'identités PLMN, d'un élément d'information de cellule réservée de la cellule logique à un état réservé ;
la suppression d'un code de zone de localisation de la cellule logique de la liste d'identités PLMN ; et
la suppression d'un code de zone de réseau d'accès radio de la cellule logique de la liste d'identités PLMN.

4. Le procédé de mise à jour d'état de cellule logique selon la revendication 1, dans lequel le procédé comprend en outre, dans un cas où la cellule logique parmi la ou les cellules logiques partageant la cellule physique est configurée de l'état de non-service à l'état de service,
la mise à jour (S401) de la liste d'identités PLMN contenue dans le message de diffusion de cellule physique en modifiant l'identité PLMN correspondant à l'indice d'identité PLMN correspondant à la cellule logique de l'identité cible à une identité correspondant à la cellule logique ; et
l'envoi (S402) du message de diffusion de cellule physique, après la mise à jour, à un terminal.

5. Le procédé de mise à jour d'état de cellule logique selon l'une quelconque des revendications 1 à 4, dans lequel, après l'envoi (S102) du message de diffusion de cellule physique après la mise à jour au terminal, le procédé comprend en outre :
dans un cas de détection qu'un temps actuel se situe dans une période de faible taux d'accès au terminal, la mise à jour (S501) de la liste d'identités PLMN contenue dans le message de diffusion de cellule physique en supprimant, de la liste d'identités PLMN, l'identité cible et chaque indice d'identité PLMN correspondant à une identité PLMN qui est définie comme l'identité cible ; et
l'envoi (S502) du message de diffusion de cellule physique, après la mise à jour, à un terminal.

6. Le procédé de mise à jour d'état de cellule logique selon l'une quelconque des revendications 1 à 4, dans lequel, après l'envoi (S102) du message de diffusion de cellule physique après la mise à jour au terminal, le procédé comprend en outre :
dans un cas où une identité PLMN récupérée dans la liste d'identités PLMN selon un indice d'identité PLMN acquis à partir d'un message de fin d'établissement de connexion de contrôle des ressources radio, RRC, envoyé par un terminal est l'identité cible, l'envoi (S204) d'un message de libération RRC au terminal.

7. Un procédé de mise à jour d'état de cellule logique, exécuté par un terminal, comprenant
la réception (S301) d'un message de diffusion de cellule physique ; et
dans un cas où, dans une liste d'identités de réseau mobile terrestre public, PLMN, contenue dans le
message de diffusion de cellule physique, une identité PLMN correspondant à un indice d'identité PLMN est
une identité cible qui indique qu'une cellule logique est en état de non-service, la définition (S302) de la cellule logique correspondant à l'indice d'identité PLMN à un état de non-service.

8. Le procédé de mise à jour d'état de cellule logique selon la revendication 7, dans lequel, dans le message de diffusion de cellule physique reçu :
un élément d'information de cellule réservée de la cellule logique est défini à un état réservé dans la liste d'identités PLMN ; et/ou
un code de zone de localisation de la cellule logique est supprimé de la liste d'identités PLMN ; et/ou
un code de zone de réseau d'accès radio de la cellule logique est supprimé de la liste d'identités PLMN.

9. Une station de base, comprenant un premier processeur (1401), une première mémoire (1402), et un premier bus de communication (1403) reliant le premier processeur (1401) et la première mémoire (1402) ;
dans lequel la première mémoire (1402) stocke un premier programme informatique, et le premier programme informatique est exécuté par le premier processeur (1401) pour mettre en œuvre les opérations du procédé de mise à jour d'état de cellule logique selon l'une quelconque des revendications 1 à 6.

10. Un terminal, comprenant un deuxième processeur (1501), une deuxième mémoire (1502), et un deuxième bus de communication (1503) reliant le deuxième processeur (1501) et la deuxième mémoire (1502) ;
dans lequel la deuxième mémoire (1502) stocke un deuxième programme informatique, et le deuxième programme informatique est exécuté par le deuxième processeur (1501) pour mettre en œuvre les opérations du procédé de mise à jour d'état de cellule logique selon la revendication 7 ou 8.

11. Un support de stockage lisible par ordinateur, dans lequel le support de stockage lisible par ordinateur stocke un premier programme informatique, et le premier programme informatique est exécuté par un premier processeur associé à une station de base pour amener la station de base à exécuter les étapes du procédé de mise à jour d'état de cellule logique selon l'une quelconque des revendications 1 à 6.

12. Un support de stockage lisible par ordinateur, dans lequel le support de stockage lisible par ordinateur
stocke un deuxième programme informatique, et le deuxième programme informatique est exécuté par un deuxième processeur associé à un terminal pour amener le terminal à exécuter les étapes selon la revendication 7 ou 8.
